# EUROPEAN PATENT APPLICATION

(11) **EP 4 474 796 A2**
(43) Date of publication of application: **11.12.2024**
(21) Application number: 24209184.1
(22) Date of filing: 02.07.2020
(51) Int. Cl.: G01N 21/3581

(54) **TERAHERTZ SENSOR MODULE FOR SPECTROSCOPY AND IMAGING**

(30) Priority: 08.08.2019 US 201916536265
(62) Divisional of application: 20750025.7
(71) Applicant: Apple Inc., Cupertino, CA 95014 (US)
(72) Inventor: RAMISETTI, Sireesha, Cupertino, 95014-2084 (US); CHEN, Chia-Chi, Cupertino, 95014-2084 (US); REDDY, Vusthla Sunil, Cupertino, 95014-2084 (US); AGBOH, Peter M., Cupertino, 95014-2084 (US); ASHIWAL, Vijendrakumar K., Cupertino, 95014-2084 (US)
(74) Representative: Zacco Denmark A/S

(57) **Abstract**

Embodiments of a terahertz (THz) sensor module are disclosed for spectroscopy and imaging in a dynamic environment. In an embodiment, a terahertz (THz) sensor module comprises: a THz emitter configured to emit a THz beam into an environment; one or more movable micro-electromechanical system (MEMS) micromirrors; and one or more MEMS motors or actuators coupled to the one or more MEMS micromirrors. The one or more MEMS motors or actuators are configured to move the one or more MEMS micromirrors to change a direction of the THz beam in the environment. A THz receiver is configured to receive a reflection of the THz beam from a reflective object in the environment.

## Description

### CROSS-REFERENCE TO RELATED APPLICATION

### TECHNICAL FIELD

This disclosure relates generally to a terahertz (THz) sensor module for spectroscopy and imaging in dynamic environments.

### BACKGROUND

Today's sensor technologies (e.g., metal-oxide (MOX) gas sensors, electrochemical gas sensors) can detect a few gases but have several disadvantages. For example, integrating a gas sensor on a consumer electronic device requires an aperture or opening to allow air to flow onto the gas sensor so that the gas can be detected. The design of an aperture into the consumer electronic device poses several challenges. The aperture may degrade water resistivity of the device. Also, the size of the aperture may be constrained due to a tradeoff between form factor and gas detection capability. In addition to aperture constraints, the number of gases detected by a given sensor is limited and one sensor cannot detect gas, liquid and solid materials. Integrating multiple sensors on the consumer electronic device to detect gas, liquid and solid materials would increase the size and cost of the consumer electronic device.

One solution to the problems described above is to integrate a THz sensor module into the consumer electronic device. The THz sensor module allows the consumer electronic device to support THz spectroscopy and imaging applications for health monitoring and other applications. With a THz sensor module, there is no need for an aperture on the consumer electronic device and gas, liquid and solid materials can be detected. However, because of the high directivity of the THz emitter, the options for integration of the THz sensor module into a consumer electronic device are limited. Moreover, the detection capability of the THz receiver may be impacted due to emission of the THz wave in a fixed direction when the mounting or holding position of the consumer electronic device is variable.

### SUMMARY

Embodiments of a THz sensor module are disclosed for spectroscopy and imaging in a dynamic environment.

In an embodiment, a terahertz (THz) sensor module comprises: a THz emitter configured to emit a THz beam into an environment; one or more movable micro-electromechanical system (MEMS) micromirrors; and one or more MEMS motors or actuators coupled to the one or more MEMS micromirrors, the one or more MEMS motors or actuators configured to move the one or more MEMS micromirrors to change a direction of the THz beam in the environment; and a THz receiver configured to receive a reflection of the THz beam from a reflective object in the environment.

In an embodiment, a method comprises: emitting, by a terahertz (THz) emitter of a THz sensor module embedded in an electronic device, a continuous-wave THz beam; setting a tilt angle i of at least one micromirror of the THz sensor module so that the THz beam is reflected off the micromirror of the THz sensor module and into an environment along a transmission plane determined at least in part by the tilt angle; determining whether the tilt angle is less than or equal to a maximum tilt angle for the micromirror; in accordance with the tilt angle being less than or equal to the maximum tilt angle: detecting a target and a reference gas/chemical concentration in the transmission plane; storing the tilt angle and target and reference gas/chemical concentrations in memory; incrementing the tilt angle by a step angle x; and returning to the setting step; in accordance with the tilt angle being greater than the maximum tilt angle: comparing the target and reference gas/chemical concentration at each stored tilt angle; compensating the target gas/chemical concentration based on results of the comparing; and reporting the target gas/chemical concentration to a host processor of the electronic device.

In an embodiment, a terahertz (THz) sensor module comprises: a first THz emitter attached to a first side of a printed circuit board (PCB), the first THz emitter configured to emit a first THz beam into an environment; a second THz emitter attached to a second, opposite side of the PCB, the second THz emitter configured to emit a second THz beam in a second, opposite direction into the environment; a first THz receiver attached to the first side of PCB, the first THz receiver configured to receive a first reflection of the first THz beam from a first reflective object in the environment; and a second THz receiver attached to the second side of the PCB, the second THz receiver configured to receive a second reflection of the second THz beam from a second reflective object in the environment.

In an embodiment, a terahertz (THz) sensor module comprises: a THz emitter configured to emit a THz beam into an environment; a plurality of fixed micromirrors to change a direction of the THz beam in the environment, wherein a first set of micromirrors steer a first THz beam generated from the THz beam in a first direction in an environment, and a second set of micromirrors steer a second THz beam generated from the THz beam in a second direction in the environment that is different than the first direction; a first THz receiver configured to receive a first reflection of the first THz beam from a first reflective object in the environment; and a second THz receiver configured to receive a second reflection of the second THz beam from a second reflective object in the environment.

One or more of the disclosed embodiments provide one or more of the following advantages. The disclosed THz sensor module uses fixed or micromirrors and/or configurable micro-electromechanical (MEMS) micromirrors to direct a THz beam in multiple transmission planes. The use of fixed or MEMS micromirrors to redirect the THz beam increases the options for embedding the THz sensor module into form factors that are commonly used for modern handheld or wearable consumer electronic devices, such as a smartphones, smartwatches or tablet computers. The disclosed embodiments also use back to back or edge to edge mounted THz sensor modules to propagate THz waves in multiple transmission planes.

The details of one or more implementations of the subject matter are set forth in the accompanying drawings and the description below. Other features, aspects and advantages of the subject matter will become apparent from the description, the drawings and the claims.

### BRIEF DESCRIPTION OF THE DRAWINGS

FIG. 1A is a conceptual block diagram of a THz spectroscopy system for estimating the concentration levels of chemicals or quality of a transmission medium or ambience in a dynamic environment, according to an embodiment.
FIG. 1B illustrates an example spectral response of a received signal, according to an embodiment.
FIG. 2A illustrates a fixed THz beam with high directivity and limited coverage, according to an embodiment.
FIG. 2B illustrates THz beam scanning to increase coverage, according to an embodiment.
FIGS. 3A and 3B illustrate transmission power loss as a function of incident angle, according to an embodiment.
FIG. 4A is a conceptual diagram of a THz sensor module that uses MEMS micromirrors, according to an embodiment.
FIG. 4B is a side view of the THz emitter shown in FIG. 4A, according to an embodiment.
FIG. 4C is a conceptual drawing of the MEMS micromirrors shown in FIG. 4A, according to an embodiment.
FIG. 5 illustrates the THz sensor module of FIG. 4 embedded in an electronic device, according to an embodiment.
FIG. 6 is a flow diagram of a THz measurement process, according to an embodiment.
FIG. 7 is a conceptual diagram of a THz sensor module that uses multiple THz emitters and receivers arranged back to back or edge to edge to ensure greater coverage, according to an embodiment.
FIG. 8 illustrates the THz sensor module of FIG. 7 embedded in an electronic device, according to an embodiment.
FIG. 9 is a conceptual diagram of a THz sensor module that uses a single THz emitter, two THz receivers and fixed micromirrors, according to an embodiment.
FIG. 10 illustrates the THz sensor module of FIG. 9 embedded in an electronic device, according to an embodiment.
FIG. 11 is a schematic diagram of a mobile device system architecture that includes a THz sensor module for performing THz spectroscopy and imaging in a dynamic environment, according to an embodiment.
FIG. 12 is example consumer electronic device architecture for implementing the features and operations described in reference to FIGS. 1-11.

### DETAILED DESCRIPTION

A molecule can absorb and re-emit an electromagnetic (EM) wave at certain frequencies, specific to the energy transitions of either electronic, vibrational, or rotational modes. Each molecular species absorbs the EM wave in a unique spectral pattern. In the gas phase, for example, the rotational transition modes occur in polar molecules that span from the microwave to infrared (IR) spectra. The rotational transitions result in an absorption spectrum that contains Lorentzian resonances at discrete frequencies. The absorption spectrum is unique to the molecule. This uniqueness enables the classification and recognition of polar gases via THz spectroscopy.

Disclosed is a THz sensor module for spectroscopy and imaging whereby THz waves are emitted in a dynamic environment in real-time by a THz sensor module embedded in an electronic device. The THz waves are reflected by one or more reflective objects (e.g., walls) in the dynamic environment and received by a receiver of the THz sensor module in real-time. If a transmission medium (e.g., gas, liquid, solid, plasma) with an absorption frequency in the THz frequency band is present between the THz emitter and the reflective object, the received signal level at that frequency will be lower than those at other frequencies. Thus, transmission mediums (e.g., gas/chemical molecules) in the dynamic environment can be detected by illuminating one or more reflective objects in the dynamic environment with a range of THz frequencies covering the absorption spectra of the transmission mediums to be detected and observing the reflected spectrums.

In an embodiment, THz waves are emitted in desired direction using a set of configurable micro-electromechanical system (MEMS) micromirrors. A micromirror includes a movable mirror surface and MEMS motor or actuator to control the position and/or angle of the micromirror. During a THz scan cycle, a THz beam lands on a first mirror and is reflected to a second mirror. The combination of the angle of incidence on each mirror allows the THz beam to be steered at different angles sequentially during a scan cycle to cover all planes of transmission. The angle at which the received signal strength is strongest is locked as the angle of incidence.

In an embodiment, the THz scan area is improved by using a wider tilt angle for the micromirrors and/or multiple micromirrors at the THz receiver. Also, the width of the micromirror can be configured to match that of antenna plus silicon lens size to allow the THz plane waves to be captured by the micromirror with minimal energy loss.

In an embodiment, the position/angle of the micromirrors is determined based on a desired angle of THz wave propagation, and the surface and/or shape of the micromirrors are planar, angular or curved for a desired direction of THz wave emission.

In an embodiment, multiple THz sensor modules are arranged back to back or edge to edge on a semiconductor substrate or printed circuit board (PCB) of the electronic device to ensure coverage in different transmission planes. In an embodiment, a single THz emitter and fixed micromirrors are used to steer the THz beam at different angles sequentially during a scan sequence to cover all planes of transmission. In an embodiment, a method comprises: determining, by a terahertz (THz) sensor module, whether a tilt angle of at least one micromirror of the THz sensor module is less than or equal to a maximum tilt angle for the micromirror; in accordance with the tilt angle being less than or equal to the maximum tilt angle: detecting a target and a reference gas/chemical concentration in an environment; storing the target and reference gas/chemical concentration in memory; incrementing the tilt angle; and returning to the determining step; in accordance with the tilt angle being greater than the maximum tilt angle: comparing the target and reference gas/chemical concentration at each stored tilt angle; compensating the target gas/chemical concentration; and reporting the target gas/chemical concentration.

One or more THz sensor module(s) can be integrated in various handheld or wearable consumer electronic devices and/or can be a plug-in accessory device which can connect electronically to a consumer electronic device through any desired interface (e.g., USB), or pair with the consumer electronic device using wireless technology (e.g., WiFi, Bluetooth). In an embodiment, a MEMS micromirror is packaged as part of an integrated circuit chip or mounted on the PCB of the electronic device. When not being used for spectroscopy or imaging, the THz sensor module(s) can be repurposed for high speed THz-based data communication applications.

### Example THz Spectroscopy System

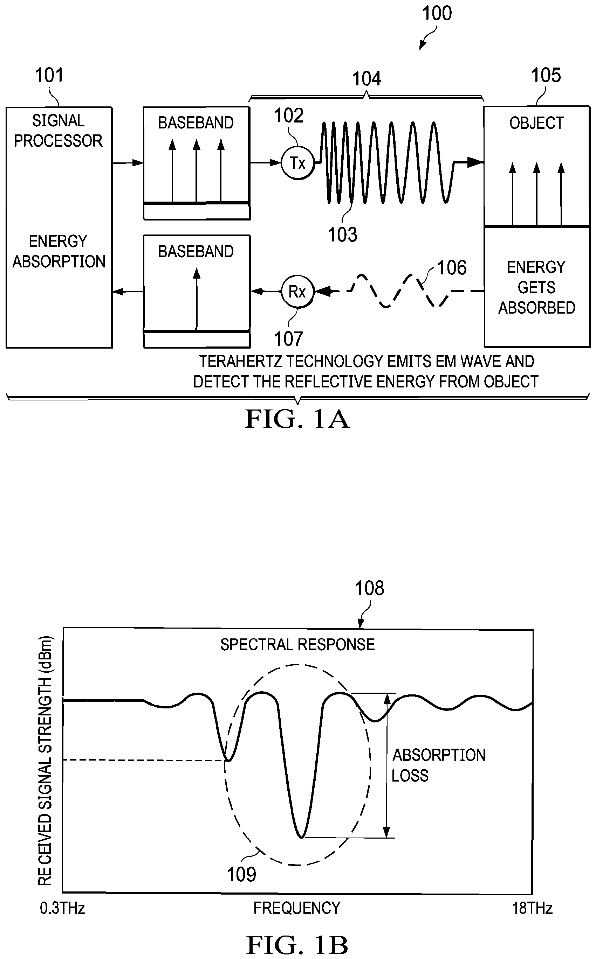

FIG. 1A is a conceptual block diagram of a THz spectroscopy system 100 for estimating the concentration levels of chemicals or quality of a transmission medium or ambience in a dynamic environment, according to an embodiment. System 100 enables consumer electronic devices (e.g., smartphones, tablet computers, wearable devices) to perform spectroscopy applications using EM waves in the THz frequency band.

The term "dynamic environment" as used in the specification is an environment where the transmission medium for the THz EM waves continuously changes in concentration level, and/or the location and/or orientation of the consumer electronic device transmitting/receiving the THz waves is changing, and/or the location and/or orientation of one or more objects reflecting the THz waves in the environment are moving. An example of a dynamic environment is an indoor location (e.g., a room in a house or office in a building) where concentration levels of dangerous gases (e.g., CO, CO₂) are continuously changing.

The term "transmission medium" as used in the specification and claims is any material substance (e.g., solid, liquid, gas or plasma) that can propagate THz waves.

The term "baseband transceiver" as used in the specification and claims is intended to include any chip, chip set or system on chip (SoC) that transmits and receives baseband signals in the THz frequency band of about 0.3 THz to about 18 THz.

System 100 includes signal processor 101, baseband transmitter 102, baseband receiver 107 and reflective object 105 (e.g., a wall). Signal processor 101 commands baseband THz transmitter 102 to emit into dynamic environment 104 a continuous-wave (CW) tone across the THz frequency band (hereinafter, referred to as "transmitted signal 103 (Tx)"). In an embodiment, transmitted signal 103 can be a pulsed waveform. Transmitted signal 103 reflects off reflection object 105 and the reflected energy is received by THz baseband receiver 107 (hereinafter, referred to as "received signal 106").

In an embodiment, baseband transmitter 102 and baseband receiver 107 are implemented as separate integrated circuit (IC) chips or are combined into a single IC chip referred to as a THz transceiver. In an alternative embodiment, baseband receiver 107 is implemented in single receiver or dual receiver configuration for multiple polarizations. In an embodiment, signal processor 101, baseband transmitter 102 and baseband receiver 107 are included together in a single housing of a consumer electronic device, such as a smartphone, tablet computer or wearable device (e.g., a smartwatch).

FIG. 1B illustrates spectral response 108 of received signal 106 computed by signal processor 101. The vertical axis of the plot is received signal strength (dBm) and the horizontal axis of the plot is frequency (THz). As can be observed from FIG. 1B, spectral response 108 includes a unique absorption signature 109 at a specific frequency in the THz frequency band. Signal processor 101 compares absorption signature 109 to known absorption signatures for various target transmission mediums (e.g., target gas/chemical molecules). If absorption signature 109 matches a known absorption signature for a target transmission medium, the target transmission medium is identified as being present in dynamic environment 104. The concentration level for the identified transmission medium is then estimated using a reference library of known concentration levels for the target transmission medium based on the measured absorption loss and path length of the received signal. In an embodiment, the reference library can be implemented as a table or other data structure. In an embodiment, signal processor 101 compensates for fixed and frequency-specific losses in the spectral response of received signal 106 due to the environment and THz spectroscopy system limitations before absorption signature 109 is compared to the reference library.

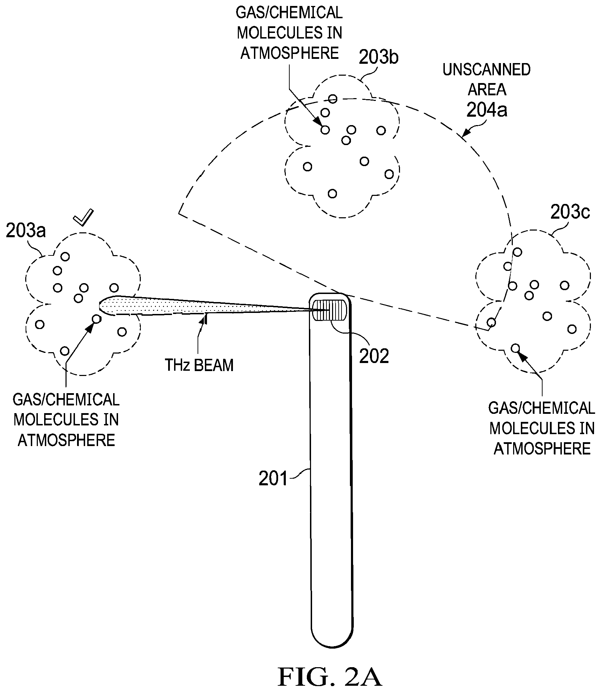

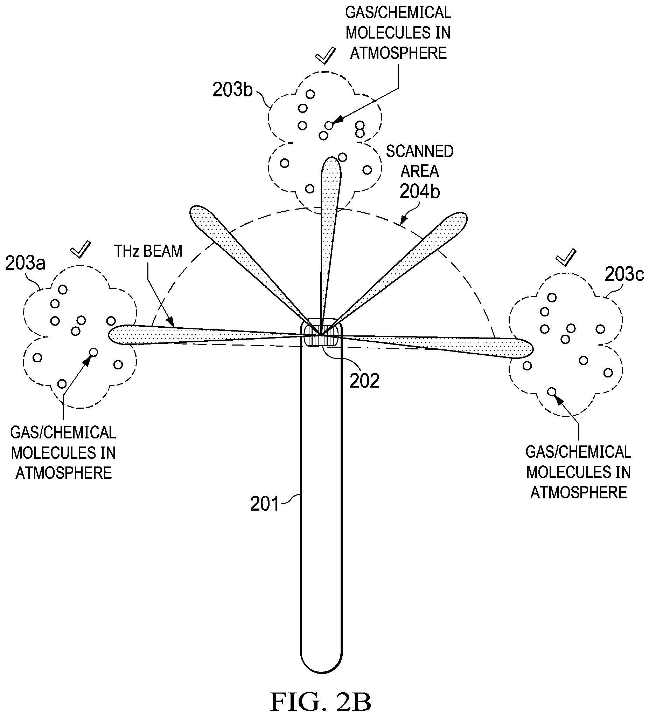

FIG. 2A illustrates a THz beam with high directivity, according to an embodiment. Electronic device 201 is shown with embedded THz sensor module 202. The high directivity of the THz emitter limits integration of THz sensor module into electronic device 201, and also limits detection capability due to restricting transmission of the THz wave in a fixed direction. For example, the transmission of the THz wave in a fixed direction leads to received signal loss when the consumer device mounting or holding position is variable. In the example shown, THz sensor module 202 can only detect gas/chemical molecules 203a and cannot detect gas/chemical molecules 203b and 203c in unscanned area 204a. For THz sensor module 202 to accurately detect gas/chemical concentrations in the entire dynamic environment, THz sensor module 202 is configured to emit a THz wave that is swept through a range of scan angles to cover scanned area 204b, as shown in FIG. 2B.

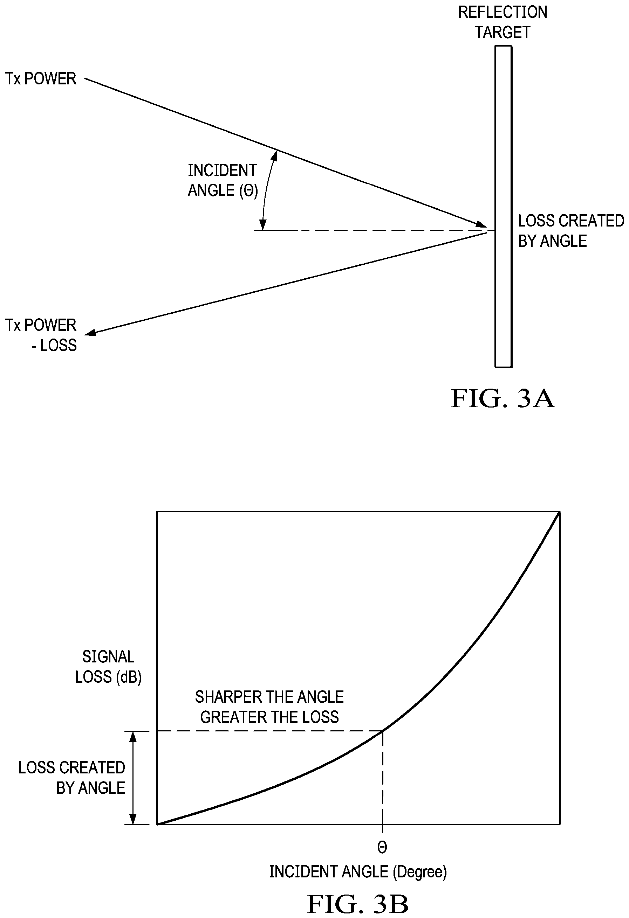

FIGS. 3A and 3B illustrate transmission power loss as a function of incident angle using adaptive beam scanning, according to an embodiment. The reflection angle and refractive index of reflection target materials impacts the signal-to-noise ratio (SNR) at the THz receiver which impacts accurate absorption signature detection. As illustrated in FIG. 3A, path loss increases as the incident angle at the reflection point at the object increases, resulting in power loss in the reflected signal. The sharper the incident angle the greater the loss, as shown in FIG. 3B.

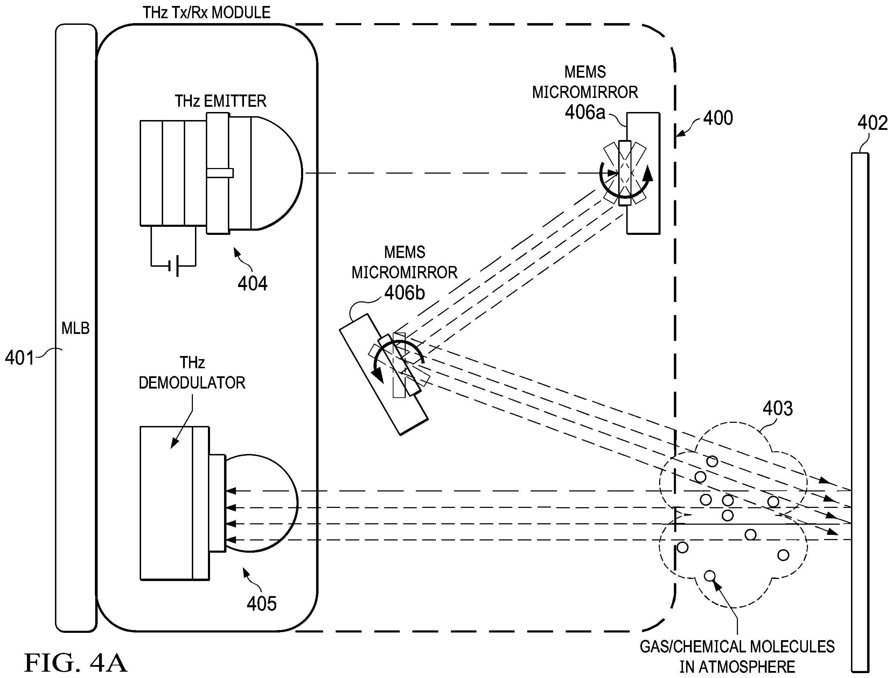

FIG. 4A is a conceptual diagram of THz sensor module 400 that uses MEMS micromirrors 406a, 406b, according to an embodiment. THz sensor module 400 is shown mounted on PCB 401 of an electronic device. THz emitter 404 emits a THz beam which is reflected by MEMS micromirror 406a toward MEMS micromirror 406b, where it is reflected into the dynamic environment. The THz beam is reflected off reflection object 402 in the dynamic environment (e.g., a wall, ceiling or floor of a building). The reflected beam passes through transmission medium 403 and is received by THz receiver 405. The received signal is demodulated and sent to a signal processor to be processed as described in reference to FIGS. 1A and 1B.

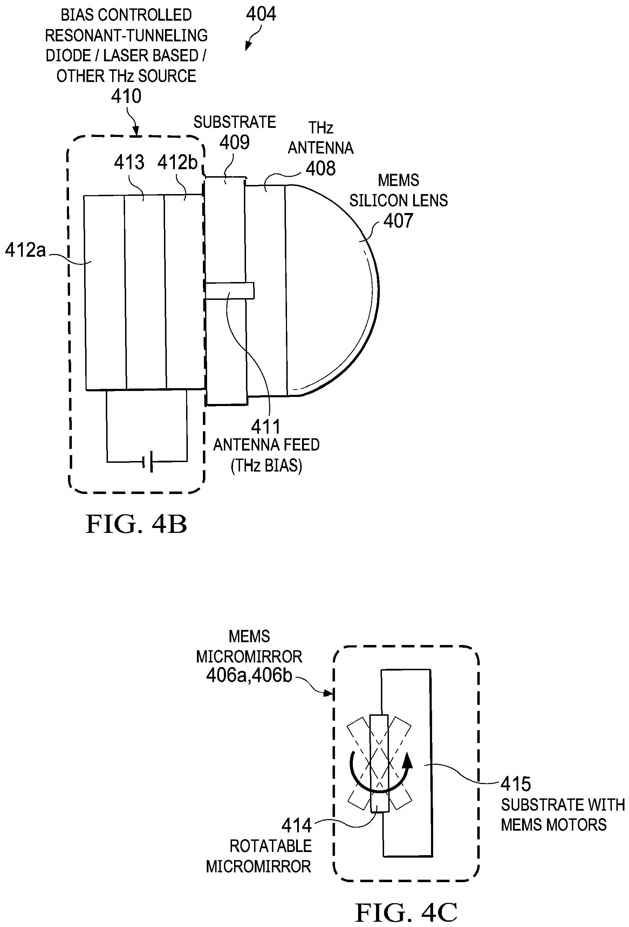

FIG. 4B is a side view of THz emitter 404, according to an embodiment. THz emitter 404 includes silicon lens 407, THz antenna 408, substrate 409 and THz source 410. Antenna feed (THz bias) 411 connects THz source 410 to THz antenna 408. THz source 410 can be a bias controlled resonant-tunneling diode (RTD). For example, the RTD can be formed as a single quantum well structure 413 surrounded by very thin layer barriers 412a, 412b. When a voltage is placed across the RTD, a THz wave is emitted. Other THz sources can also be used such as semiconductor lasers. For example, continuous-wave THz radiation can be produced by photomixing the combined output of two single-frequency diode lasers in a photoconductive switch (PCS).

FIG. 4C is a conceptual drawing of MEMS micromirrors 406a, 406b shown in FIG. 4A, according to an embodiment. In an embodiment, MEMS micromirrors 406a, 406b are microscopically small mirrors that include mirror 414 rotatably attached to substrate 415. Substrate 415 can include a MEMS motor or actuator that is configured to rotate mirror 414. For example, in an embodiment, mirror 414 is a digital micromirror (DMM) attached to a voltage-controlled actuator paddle by one or more flexures. The voltage-controlled actuator paddle is mounted on a base plate that includes interdigitated electrostatic combs that serve as both an actuator and a sensor for applying torque to mirror 414. The voltage-controlled actuator paddle also provides capacitive feedback position sensing for use by a closed-loop control system, where the measured capacitance is a function of the mirror tilt angle i.

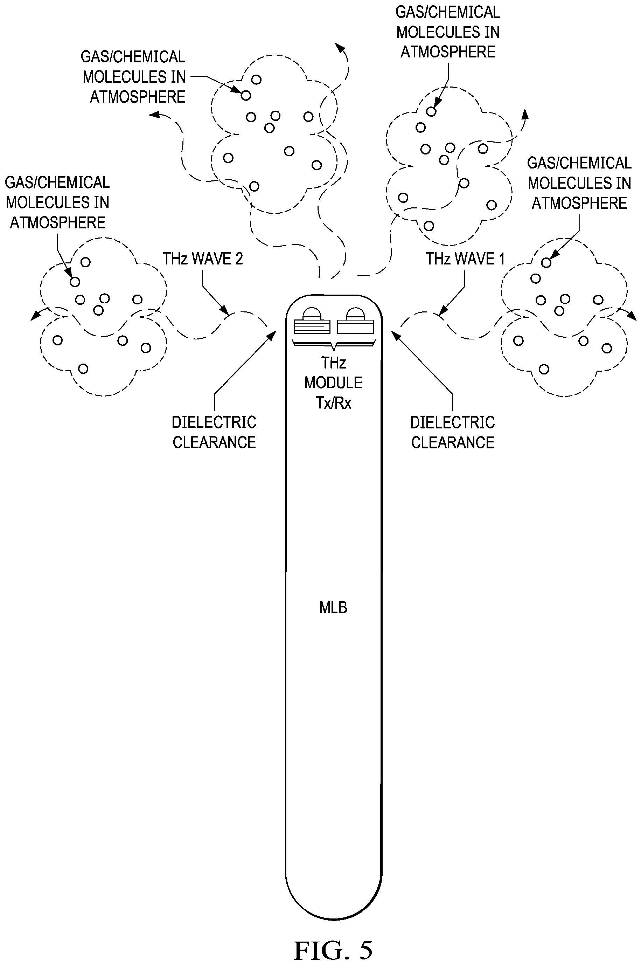

FIG. 5 illustrates THz sensor module 400 embedded in electronic device 500 (e.g., a smart phone), according to an embodiment. THz sensor module 400 is shown attached to PCB 401 in electronic device 500. In this configuration, THz emitter 404 transmits in an angular range of about 0° to 180°. A dielectric clearance is used to ensure that the THz beam is not blocked by metal surfaces and to avoid locations where the THz beam may be covered by the user's hand. In the example shown, electronic device 500 is a smartphone and the optimum locations for THz sensor module 400 are at the top and/or bottom edge(s) of electronic device 500 to ensure that the THz beam is not obstructed by metal surfaces and various user handgrip scenarios.

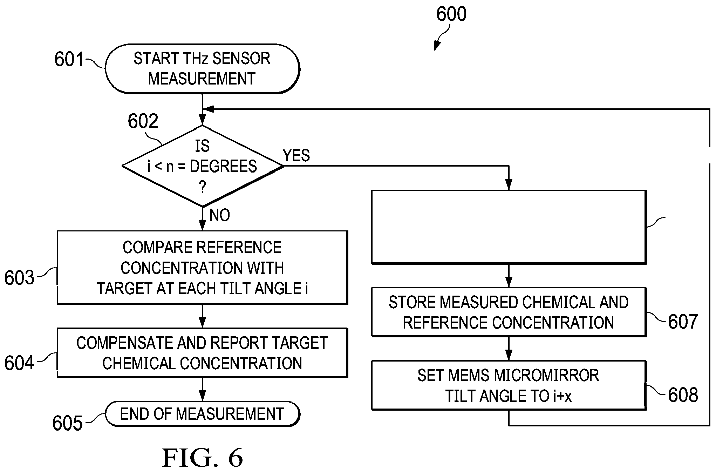

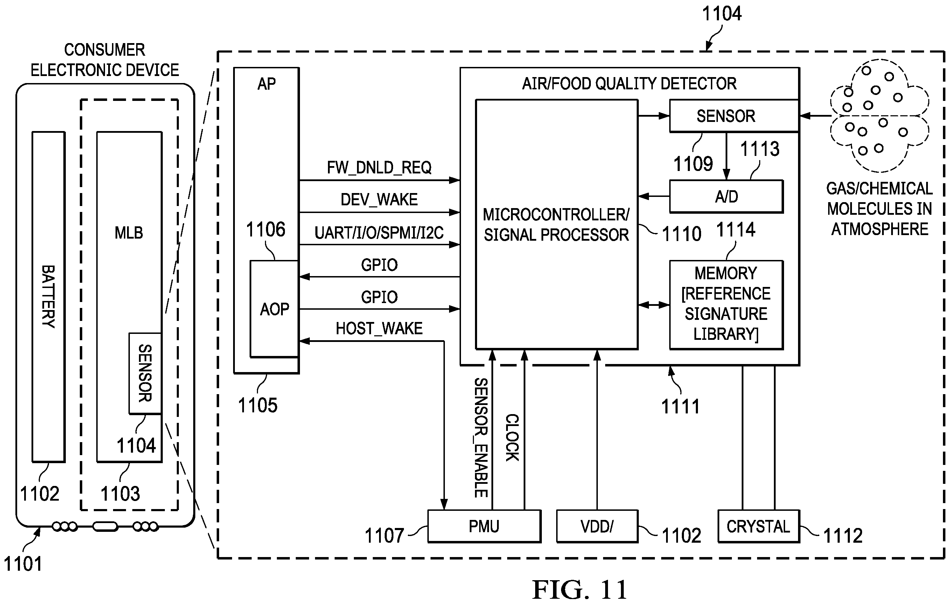

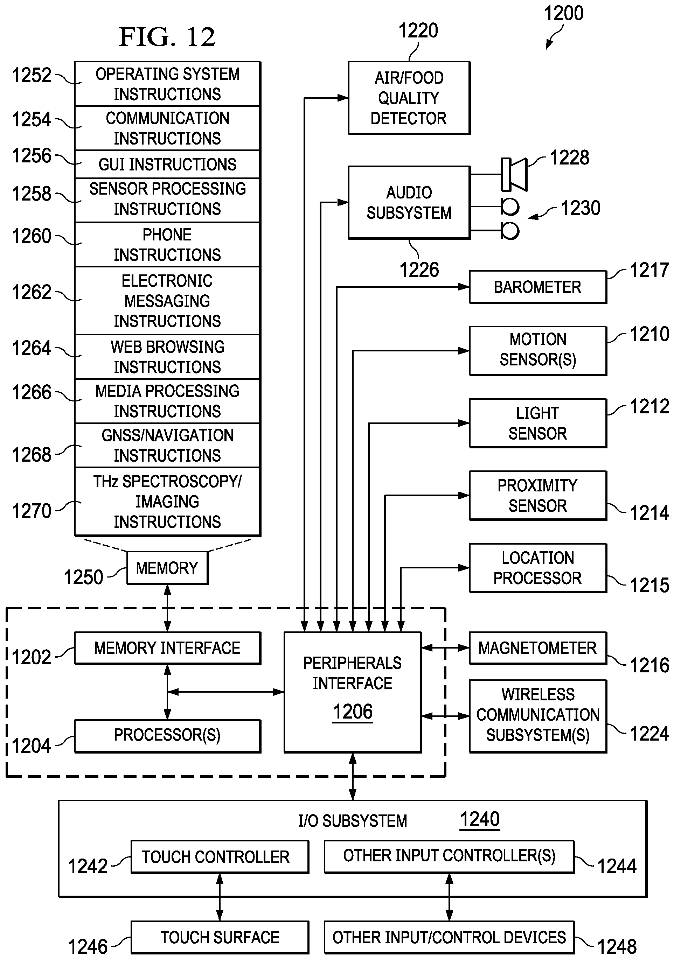

FIG. 6 is a flow diagram of a THz measurement process 600, according to an embodiment. Process 600 can be implemented by architectures 1100, 1200 shown in FIGS. 11 and 12.

Process 600 begins by starting a THz measurement (601). For example, a THz spectroscopy and/or imaging application can be invoked by a user or automatically on the electronic device. The application can then invoke the THz scan of the dynamic environment. At startup of each THz scan, the MEMS micromirror tilt angle i is initialized to a starting value (e.g., 0°).

Process 600 continues by determining whether the MEMS micromirror tilt angle i is less than or equal to *n* degrees (602), where *n* is the maximum tilt angle for the MEMS micromirror (e.g., 45°). In accordance with the tilt angle being less than or equal to n, process 600 sets the micromirror tilt angle to i degrees (606), measures and stores a target gas/chemical concentration and reference gas/chemical concentration in memory of the electronic device (607) and sets the MEMS micromirror tilt angle to *i* + *x* (608), where x is a step angle (e.g., x= 1 degree). Process 600 then returns to step 602 to perform another THz measurement.

In accordance with the tilt angle *i* being greater than *n,* process 600 compares a reference concentration with a target gas/chemical concentration at each stored tilt angle i (603), compensates and reports the target gas/chemical concentration (604) and ends the THz scan (605). In an embodiment, the step angle x can be adjusted based on various factors, such as remaining battery power, the stationarity and/or orientation of the electronic device in the environment (e.g., stationary on a surface) and/or the number expected gases/chemicals and their locations in the dynamic environment. Note that the angles can be specified in units of degrees or radians.

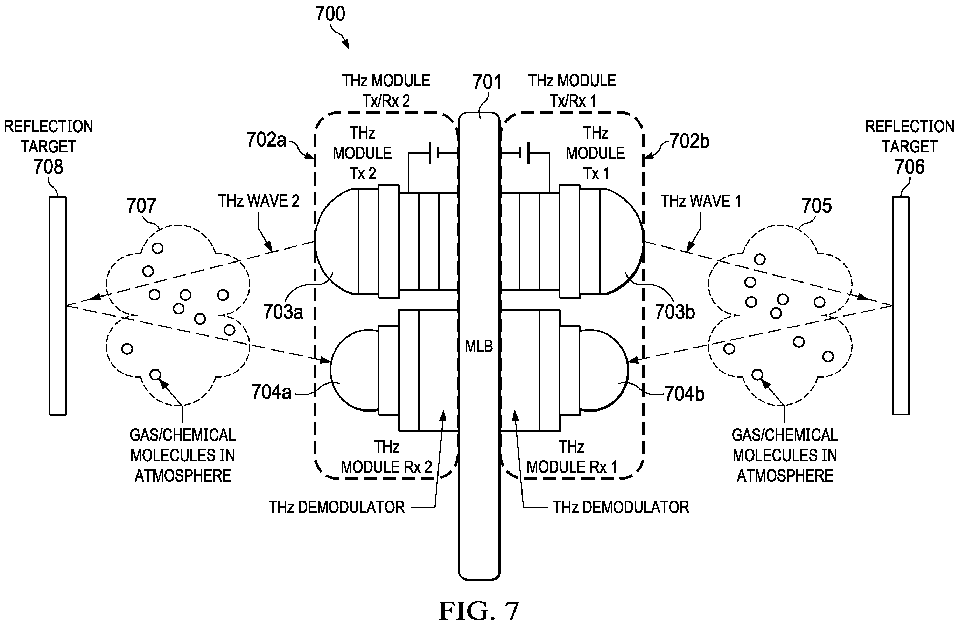

FIG. 7 is a conceptual diagram of multiple THz sensor modules 702a, 702b arranged back to back or edge to edge on PCB 701 to ensure coverage in different planes of transmission. Attached to a first side of PCB 701 is THz sensor module 702a. THz emitter 703a embedded in THz sensor module 702a emits a first THz wave in a first direction in a dynamic environment, which reflects off reflection target 708 in the dynamic environment. The reflected THz wave is received by THz receiver 704a embedded in THz sensor module 702a, where the received signal is demodulated and sent to a signal processor to be processed as described in reference to FIGS. 1A and 1B.

Attached to a second, opposite side of PCB 701 is THz sensor module 702b. THz transmitter 703b embedded in THz sensor module 702b emits a second THz beam in a second direction opposite the first direction, which reflects off of a reflection target 706 in the dynamic environment. The reflected THz beam is received by THz receiver 704b embedded in THz sensor module 702b. In an embodiment, multiple back to back THz sensor module pairs can be attached to PCB 701 to ensure coverage for a variety of orientations of the electronic device. Each pair of modules can run in parallel or in a time-multiplexed manner, and each pair of modules can be configured to target a different gas/chemical.

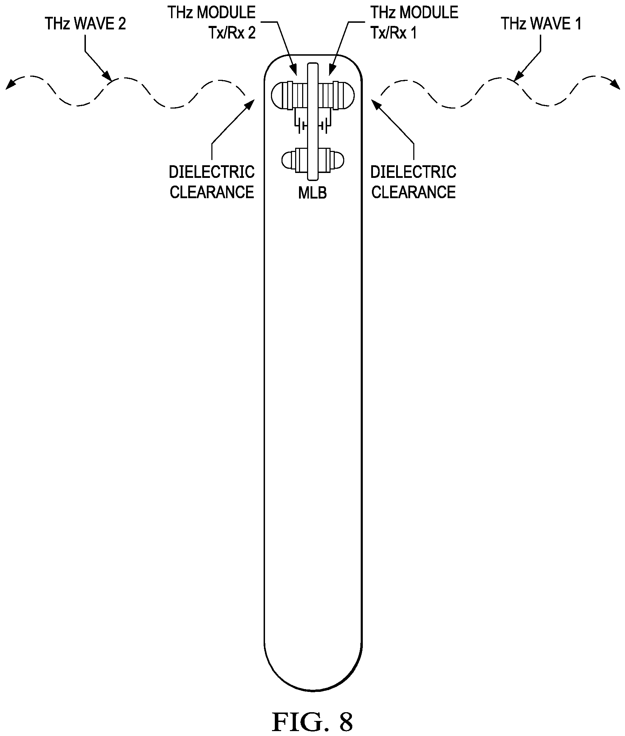

FIG. 8 illustrates back to back THz sensor modules 702a, 702b of FIG. 7 embedded in an electronic device 800, according to an embodiment. THz sensor modules 702a, 702b can be attached to a PCB of electronic device 800. In this configuration, THz emitters 703a, 703b each transmit in an angular range of about 0°-180°, so that collectively the emitters cover about 360° of the dynamic environment. The dielectric clearance shown is used to ensure that the THz beam is not blocked by metal surfaces and to avoid locations where the THz beam may be covered by the user's hand. In the example shown, electronic device 800 is a smartphone and the optimum locations for back to back THz sensor modules 702a, 702b are at the top and/or bottom edge(s) of electronic device 800 to ensure that the THz beam is not obstructed by metal surfaces and various user handgrip scenarios.

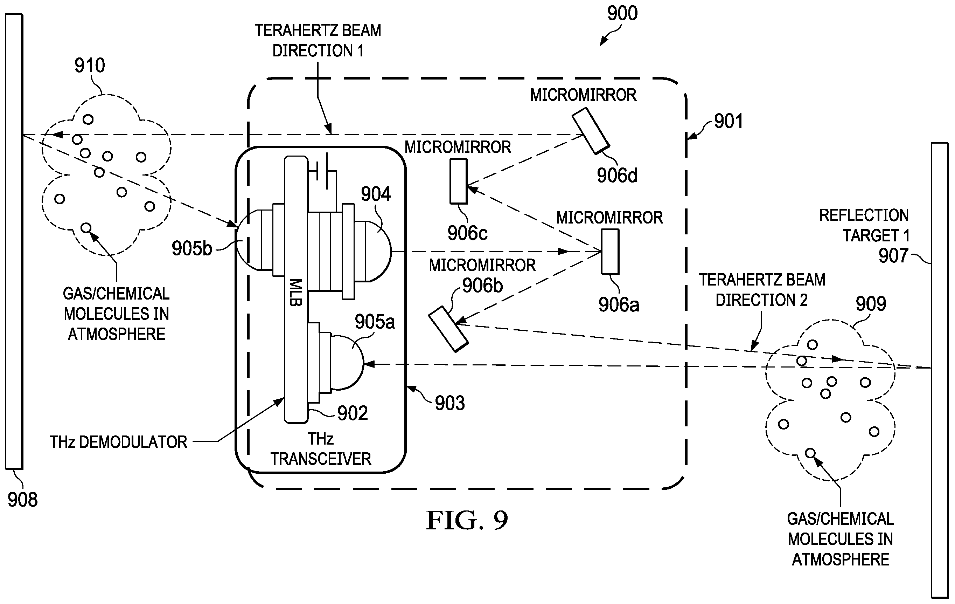

FIG. 9 is a conceptual diagram of a THz sensor module 900 that uses a single THz emitter, two THz receivers and fixed micromirrors, according to an embodiment. THz sensor module 900 includes THz transceiver 903 which further includes THz emitter 904 and THz receivers 905a, 905b mounted on PCB 902. THz emitter 904 emits a THz beam which is reflected off of micromirrors 906a, 906b into a dynamic environment in a first direction. In the dynamic environment, the THz beam is reflected off reflection object 907. The reflected THz beam passes through atmosphere 909 before it is received by THz receiver 905a, where it is demodulated and sent to a digital signal processor to be processed as described in reference to FIGS. 1A and 1B.

Additionally, the THz beam emitted from THz emitter 904 is reflected off fixed micromirrors 906a, 906c and 906d, before entering the dynamic environment in a second direction, opposite the first direction. In the dynamic environment, the THz beam is reflected off of reflection object 908. The reflected THz beam passes through atmosphere 910 before it is received by THz receiver 905b, where it is demodulated by demodulator and sent to a signal processor to be processed as described in reference to FIGS. 1A and 1B.

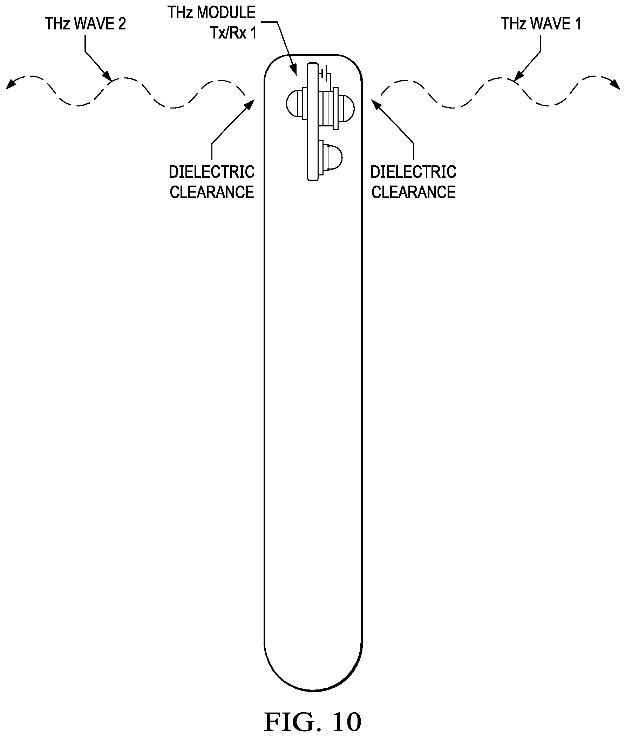

FIG. 10 illustrates the THz sensor module of FIG. 9 embedded in an electronic device, according to an embodiment. THz sensor module 900 can be attached to PCB 902 of electronic device 900. In this configuration, THz transceiver 903 and fixed micromirrors are used together to emit THz waves for 360° coverage of the dynamic environment. The dielectric clearance shown is used to ensure that the THz beam is not blocked by metal surfaces and to avoid locations where the THz beam may be covered by the user's hand. In the example shown, electronic device 900 is a smartphone and the optimum locations for THz sensor module 900 are at the top and/or bottom edge(s) of electronic device 900 to ensure that the THz beam is not obstructed by metal surfaces and various user handgrip scenarios.

FIG. 11 is a schematic diagram of an architecture 1104 for performing THz spectroscopy and imaging in a dynamic environment, according to an embodiment. Architecture 1104 is shown implemented on PCB 1103 installed in consumer electronic device 1101, which in this example is a smartphone. Architecture 1104 includes application processor (AP) 1105, Always on Processor (AOP) 1106, air/food quality detector 1111 and power management unit (PMU) 1107. Air/food quality detector 1111 further includes microcontroller/signal processor 1110, memory 1114, THz sensor module 1109 and analog-to-digital (A/D) converter 1113. Air/food quality detector 1111 is coupled to crystal oscillator 1111 and power source 1102 (e.g., battery 1102) and can be implemented as a SoC on mobile device 1101.

In an embodiment, AOP 1106 is coupled to microcontroller/signal processor 1110 using general purpose I/O (GPIO) pins. AOP 1106 is "always on" while consumer electronic device 1101 is operating. This allows for continuous sensing of, for example, gas concentrations in dynamic environments. In an application, a user carries consumer electronic device 1101 on their person and if they enter an indoor environment that has an unhealthy concentration of a harmful gas (e.g., CO₂, CO), the user is automatically alerted through visual and/or audio feedback of the air/food quality on a display screen of mobile device 1101 and/or audible alarm played through audio subsystem of mobile device 1101 and/or force feedback through a haptic engine of mobile device 1101, as described in reference to FIG. 20.

In an embodiment, AOP 1106 is coupled to PMU 1107 and provides a HOST_WAKE signal to PMU 1107. In response to receiving the HOST_WAKE signal, PMU 1107 provides a SENSOR_EN signal to microcontroller/signal processor 1110 to enable air/food quality detector 1109. PMU 1107 also provides a clock signal to microcontroller/signal processor 1110.

In an embodiment, AP 1105 communicates with microcontroller/signal processor 1110 through a serial communication interface, such as UART, SPI or I2C. AP 1105 also provides a DEV_WAKE signal to wake-up microcontroller/signal processor 1110 and a FW_DNLD_REQ to microcontroller/signal processor 1110 to update firmware in memory 1114 for the sensor 1109. In an embodiment, memory 1114 stores target material spectral responses and the reference library described in reference to FIGS. 1A and 1B. Memory 1114 can be non-volatile memory such as flash memory.

In an embodiment, THz sensor module 1109 is commanded by microcontroller/signal processor 1110 to emit THz waves into the dynamic environment, and receive THz waves reflected from one or more objects in the dynamic environment, as described in reference to FIGS. 1A and 1B. The received signals are converted from analog to digital values by A/D converter 1113 and input to microcontroller/signal processor 1110. Microcontroller/signal processor 1110 computes the spectral response of the received signal using a frequency transformation. An example frequency transformation is the Fast Fourier Transform (FFT) but other methods can also be used such as linear predictive coding (LPC). Microcontroller/signal processor 1110 performs the compensation techniques to remove impairments from the spectral response of the received signal due to environment and system loses. Microcontroller/signal processor 1110 then implements a matching algorithm on the absorption signature of the received signal and known target absorption signatures stored in memory 1114.

In an embodiment, the matching is done by comparing absorptions spectra in the frequency domain. For example, the reference library in memory 1114 records carbon monoxide (CO) as having an absorption spectra at frequency 0.692 THz. When the EM wave is transmitted, the system will determine from the absorption spectra of the reflected signal if the frequency of 0.692 THz has any absorption. A match occurs when absorption spectra is detected at 0.692 THz.

In an alternative embodiment, the matching of absorption signatures is accomplished by computing a Euclidean distance, or other suitable distance metric, between the measured absorption signature and each of the known absorption signatures stored in memory 1114. In an embodiment, the target transmission medium having an absorption signature that is the minimum Euclidean distance from the measured absorption signature is the best match. After a matching is found, Microcontroller/signal processor 1110 accesses a reference library of concentration levels stored in memory 1114 to estimate the concentration level of the matched transmission medium. Microcontroller/signal processor 1110 then reports the detected transmission medium and its estimated concentration level to AOP 1106. The reported information is used by an application running on AP 1105 to generate an alert on mobile device 1101 or perform any other desired task using the reported information. The alert can be in any desired format using any desired output device, including but not limited to: display screens, instant messaging, email, audio feedback and force feedback.

In an application, the consumer electronic device can report the information to a centralized server that crowd sources similar information from many devices for a particular geographic area. For example, data can be harvested from multiple mobile devices operating at a disaster site (e.g., a building fire) through one or more wireless access points near the disaster site and the data can be combined and analyzed to determine the risk of exposure of first responders to dangerous gases present at the disaster site.

In another application, architecture 1104 can be integrated into a smart speaker or other Internet of things (IoT) device. The device respond to user voice commands, such as "What is the carbon dioxide level in this room?" In an embodiment, the device can be integrated with a WiFi network so that multiple devices can be placed in different rooms/offices and report local gas concentration levels. In an embodiment, the device can detect smoke and/or dangerous gases caused by a fire such as carbon monoxide (CO) or hydrogen cyanide (HC), and generate an alert and/or automatically call for emergency assistance.

### Exemplary Electronic Device Architecture

FIG. 12 illustrates example electronic device architecture 1200 implementing the features and operations described in reference to FIGS. 1-11. Architecture 1200 can include memory interface 1202, one or more data processors, image processors and/or processors 1204 and peripherals interface 1206. Memory interface 1202, one or more processors 1204 and/or peripherals interface 1206 can be separate components or can be integrated in one or more integrated circuits.

Sensors, devices and subsystems can be coupled to peripherals interface 1206 to provide multiple functionalities. For example, one or more motion sensors 1210, light sensor 1212 and proximity sensor 1212 can be coupled to peripherals interface 1206 to facilitate motion sensing (e.g., acceleration, rotation rates), lighting and proximity functions of the wearable computer. Location processor 1215 can be connected to peripherals interface 1206 to provide geopositioning. In some implementations, location processor 1215 can be a GNSS receiver, such as the Global Positioning System (GPS) receiver. Electronic magnetometer 1216 (e.g., an integrated circuit chip) can also be connected to peripherals interface 1206 to provide data that can be used to determine the direction of magnetic North. Electronic magnetometer 1216 can provide data to an electronic compass application. Motion sensor(s) 1210 can include one or more accelerometers and/or gyros configured to determine change of speed and direction of movement of the wearable computer. Barometer 1217 can be configured to measure atmospheric pressure around the mobile device. Air/food quality detector 1220 (see FIG. 11) can be configured to perform the THz spectroscopy and imaging.

In an embodiment, a digital image capture device and a depth sensor (both not shown) can be coupled to peripherals interface 1206. The digital image capture device (e.g., a video camera) captures images (e.g., digital photos, video clips) and depth sensor (e.g., infrared, LIDAR) capture depth data (e.g., point cloud data) for rendering three-dimensional scenes for augmented reality (AR) and virtual reality (VR) applications.

Communication functions can be facilitated through wireless communication subsystems 1224, which can include radio frequency (RF) receivers and transmitters (or transceivers) and/or optical (e.g., infrared) receivers and transmitters. The specific design and implementation of the communication subsystem 1224 can depend on the communication network(s) over which a mobile device is intended to operate. For example, architecture 1200 can include communication subsystems 1224 designed to operate over a GSM network, 3G, 4G, 5G, a GPRS network, an EDGE network, a WiFi^{™} network, near field (NF) and a Bluetooth^{™} network. In particular, the wireless communication subsystems 1224 can include hosting protocols, such that the mobile device can be configured as a base station for other wireless devices.

Audio subsystem 1226 can be coupled to a speaker 1228 and a microphone 1230 to facilitate voice-enabled functions, such as voice recognition, voice replication, digital recording and telephony functions. Audio subsystem 1226 can be configured to receive voice commands from the user.

I/O subsystem 1240 can include touch surface controller 1242 and/or other input controller(s) 1244. Touch surface controller 1242 can be coupled to a touch surface 1246. Touch surface 1246 and touch surface controller 1242 can, for example, detect touch contact and movement (gestures) or break thereof using any of a plurality of touch sensitivity technologies, including but not limited to capacitive, resistive, infrared and surface acoustic wave technologies, as well as other proximity sensor arrays or other elements for determining one or more points of contact with touch surface 1246. Touch surface 1246 can include, for example, a touch screen or the digital crown of a smart watch. I/O subsystem 1240 can include a haptic engine or device for providing haptic feedback (e.g., vibration) in response to commands from processor 1204. In an embodiment, touch surface 1246 can be a pressure-sensitive surface.

Other input controller(s) 1244 can be coupled to other input/control devices 1248, such as one or more buttons, rocker switches, thumb-wheels, infrared ports, Thunderbolt^{®} ports and USB ports. The one or more buttons (not shown) can include an up/down button for volume control of speaker 1228 and/or microphone 1230. Touch surface 1246 or other controllers 1244 (e.g., a button) can include, or be coupled to, fingerprint identification circuitry for use with a fingerprint authentication application to authenticate a user based on their fingerprint(s).

In one implementation, a pressing of the button for a first duration may disengage a lock of the touch surface 1246; and a pressing of the button for a second duration that is longer than the first duration may turn power to the mobile device on or off. The user may be able to customize a functionality of one or more of the buttons. The touch surface 1246 can, for example, also be used to implement virtual or soft buttons.

In some implementations, the mobile device can present recorded audio and/or video files, such as MP3, AAC and MPEG files. In some implementations, the mobile device can include the functionality of an MP3 player. Other input/output and control devices can also be used.

Memory interface 1202 can be coupled to memory 1250. Memory 1250 can include high-speed random access memory and/or non-volatile memory, such as one or more magnetic disk storage devices, one or more optical storage devices and/or flash memory (e.g., NAND, NOR). Memory 1250 can store operating system 1252, such as the iOS operating system developed by Apple Inc. of Cupertino, California. Operating system 1252 may include instructions for handling basic system services and for performing hardware dependent tasks. In some implementations, operating system 1252 can include a kernel (e.g., UNIX kernel).

Memory 1250 may also store communication instructions 1254 to facilitate communicating with one or more additional devices, one or more computers and/or one or more servers, such as, for example, instructions for implementing a software stack for wired or wireless communications with other devices. Memory 1250 may include graphical user interface instructions 1256 to facilitate graphic user interface processing; sensor processing instructions 1258 to facilitate sensor-related processing and functions; phone instructions 1260 to facilitate phone-related processes and functions; electronic messaging instructions 1262 to facilitate electronic-messaging related processes and functions; web browsing instructions 1264 to facilitate web browsing-related processes and functions; media processing instructions 1266 to facilitate media processing-related processes and functions; GNSS/Location instructions 1268 to facilitate generic GNSS and location-related processes and instructions; and THz spectroscopy and imaging instructions 1270 to facilitate THz spectroscopy and imaging, as described in reference to FIGS. 1A and 1B.

Each of the above identified instructions and applications can correspond to a set of instructions for performing one or more functions described above. These instructions can be implemented as separate software programs, procedures, or modules or as a single body of code. Memory 1250 can include additional instructions or fewer instructions. Various functions of the mobile device may be implemented in hardware and/or in software, including in one or more signal processing and/or application specific integrated circuits.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., SWIFT, Objective-C, C#, Java), including compiled or interpreted languages, and it can be deployed in any form, including as a stand-alone program or as a module, component, subroutine, a browser-based web application, or other unit suitable for use in a computing environment.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As described above, one aspect of the present technology is the gathering and use of data available from various sources to improve the delivery to users of invitational content or any other content that may be of interest to them. The present disclosure contemplates that in some instances, this gathered data may include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

Exemplary methods, devices, and electronic devices are set out in the following items:
1. A terahertz (THz) sensor module, comprising:
   a THz emitter configured to emit a THz beam into an environment;
   one or more movable micro-electromechanical system (MEMS) micromirrors; and
   one or more MEMS motors or actuators coupled to the one or more MEMS micromirrors, the one or more MEMS motors or actuators configured to move the one or more MEMS micromirrors to change a direction of the THz beam in the environment; and
   a THz receiver configured to receive a reflection of the THz beam from a reflective object in the environment.
2. The THz sensor module of item 1, wherein a width of the one or more MEMS micromirrors matches a width of the THz emitter.
3. The THz sensor module of item 1, wherein at least one MEMS micromirror is angled or curved.
4. The THz sensor module of item 1, wherein the THz emitter and THz receiver are mounted on a common printed circuit board.
5. The THz sensor module of item 1, wherein the THz emitter and THz receiver are mounted on a common semiconductor substrate of an integrated circuit chip or system on chip.
6. A method comprising:
   emitting, by a terahertz (THz) emitter of a THz sensor module embedded in an electronic device, a continuous-wave THz beam;
   setting a tilt angle *i* of at least one micromirror of the THz sensor module so that the THz beam is reflected off the micromirror of the THz sensor module and into an environment along a transmission plane determined at least in part by the tilt angle;
   determining whether the tilt angle is less than or equal to a maximum tilt angle for the micromirror;
      in accordance with the tilt angle being less than or equal to the maximum tilt angle:
         detecting a target and a reference gas/chemical concentration in the transmission plane;
         storing the tilt angle and target and reference gas/chemical concentrations in memory;
         incrementing the tilt angle by a step angle *x;* and
      returning to the setting step;
      in accordance with the tilt angle being greater than the maximum tilt angle:
         comparing the target and reference gas/chemical concentration at each stored tilt angle;
         compensating the target gas/chemical concentration based on results of the comparing; and
         reporting the target gas/chemical concentration to a host processor of the electronic device.
7. The THz sensor module of item 6, wherein the step angle *x* is adjusted based on at least one of remaining battery power, stationarity or orientation of the electronic device.
8. A terahertz (THz) sensor module, comprising:
   a THz emitter configured to emit a THz beam into an environment;
   a plurality of fixed micromirrors to change a direction of the THz beam in the environment, wherein a first set of micromirrors steer a first THz beam generated from the THz beam in a first direction in an environment, and a second set of micromirrors steer a second THz beam generated from the THz beam in a second direction in the environment that is different than the first direction;
   a first THz receiver configured to receive a first reflection of the first THz beam from a first reflective object in the environment; and
   a second THz receiver configured to receive a second reflection of the second THz beam from a second reflective object in the environment.
9. The THz sensor module of item 8, wherein a width of at least one fixed micromirror matches a width of the THz emitter.
10. The THz sensor module of item 8, wherein at least one fixed micromirror is angled or curved.
11. The THz sensor module of item 8, wherein the THz emitter and THz receivers are mounted on a common printed circuit board.
12. The THz sensor module of item 8, wherein the THz emitter and THz receivers are mounted on a common semiconductor substrate of an integrated circuit chip or system on chip.
13. A terahertz (THz) sensor module, comprising:
   a first THz emitter attached to a first side of a printed circuit board (PCB), the first THz emitter configured to emit a first THz beam into an environment;
   a second THz emitter attached to a second, opposite side of the PCB, the second THz emitter configured to emit a second THz beam in a second, opposite direction into the environment;
   a first THz receiver attached to the first side of PCB, the first THz receiver configured to receive a first reflection of the first THz beam from a first reflective object in the environment; and
   a second THz receiver attached to the second side of the PCB, the second THz receiver configured to receive a second reflection of the second THz beam from a second reflective object in the environment.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A terahertz, THz, sensor module, comprising:
a THz emitter configured to emit a THz beam into an environment;
one or more movable micro-electromechanical system, MEMS, micromirrors; and
one or more MEMS motors or actuators coupled to the one or more MEMS micromirrors, the one or more MEMS motors or actuators configured to move the one or more MEMS micromirrors to change a direction of the THz beam in the environment; and
a THz receiver configured to receive a reflection of the THz beam from a reflective object in the environment,
wherein at least one MEMS micromirror has a tilt angle i so that the THz beam is reflected off the MEMS micromirror of the THz sensor module and into an environment along a transmission plane determined at least in part by the tilt angle,
the THz sensor module is configured to determine whether a tilt angle of the at least one MEMS micromirrors of the THz sensor module is less than or equal to a maximum tilt angle for the MEMS micromirror; in accordance with the tilt angle being less than or equal to the maximum tilt angle: detecting a target and a reference gas/chemical concentration in the transmission plane; storing the tilt angle and target and reference gas/chemical concentrations in memory; incrementing the tilt angle by a step angle x; and returning to the determining step; in accordance with the tilt angle being greater than the maximum tilt angle: comparing the target and reference gas/chemical concentration at each stored tilt angle; compensating the target gas/chemical concentration based on results of the comparing; and reporting the target gas/chemical concentration.

2. The THz sensor module of claim 1, wherein a width of the one or more MEMS micromirrors matches a width of the THz emitter.

3. The THz sensor module of claim 1, wherein at least one MEMS micromirror is angled or curved.

4. The THz sensor module of claim 1, wherein the THz emitter and THz receiver are mounted on a common printed circuit board.

5. The THz sensor module of claim 1, wherein the THz emitter and THz receiver are mounted on a common semiconductor substrate of an integrated circuit chip or system on chip.

6. A method for measuring terahertz comprising:
emitting, by a terahertz, THz, emitter of a THz sensor module embedded in an electronic device, a continuous-wave THz beam;
setting a tilt angle *i* of at least one micromirror of the THz sensor module so that the THz beam is reflected off the micromirror of the THz sensor module and into an environment along a transmission plane determined at least in part by the tilt angle;
determining whether the tilt angle is less than or equal to a maximum tilt angle for the micromirror;
in accordance with the tilt angle being less than or equal to the maximum tilt angle:
detecting a target and a reference gas/chemical concentration in the transmission plane;
storing the tilt angle and target and reference gas/chemical concentrations in memory;
incrementing the tilt angle by a step angle x; and
returning to the setting step;
in accordance with the tilt angle being greater than the maximum tilt angle:
comparing the target and reference gas/chemical concentration at each stored tilt angle;
compensating the target gas/chemical concentration based on results of the comparing; and
reporting the target gas/chemical concentration to a host processor of the electronic device.

7. The THz sensor module of claim 6, wherein the step angle x is adjusted based on at least one of remaining battery power, stationarity or orientation of the electronic device.

8. A terahertz, THz, sensor module, comprising:
a THz emitter configured to emit a THz beam into an environment;
a plurality of fixed micromirrors to change a direction of the THz beam in the environment, wherein a first set of micromirrors steer a first THz beam generated from the THz beam in a first direction in an environment, and a second set of micromirrors steer a second THz beam generated from the THz beam in a second direction in the environment that is different than the first direction;
a first THz receiver configured to receive a first reflection of the first THz beam from a first reflective object in the environment; and
a second THz receiver configured to receive a second reflection of the second THz beam from a second reflective object in the environment,
wherein at least one fixed micromirror has a tilt angle i so that the THz beam is reflected off the fixed micromirror of the THz sensor module and into an environment along a transmission plane determined at least in part by the tilt angle,
the THz sensor module is configured to determine whether a tilt angle of the at least one fixed micromirrors of the THz sensor module is less than or equal to a maximum tilt angle for the fixed micromirror; in accordance with the tilt angle being less than or equal to the maximum tilt angle: detecting a target and a reference gas/chemical concentration in the transmission plane; storing the tilt angle and target and reference gas/chemical concentrations in memory; incrementing the tilt angle by a step angle x; and returning to the determining step;
in accordance with the tilt angle being greater than the maximum tilt angle:
comparing the target and reference gas/chemical concentration at each stored tilt angle;
compensating the target gas/chemical concentration based on results of the comparing; and
reporting the target gas/chemical concentration.

9. The THz sensor module of claim 8, wherein a width of at least one fixed micromirror matches a width of the THz emitter.

10. The THz sensor module of claim 8, wherein at least one fixed micromirror is angled or curved.

11. The THz sensor module of claim 8, wherein the THz emitter and THz receivers are mounted on a common printed circuit board.

12. The THz sensor module of claim 8, wherein the THz emitter and THz receivers are mounted on a common semiconductor substrate of an integrated circuit chip or system on chip.

13. A terahertz, THz, sensor module, comprising:
a first THz emitter attached to a first side of a printed circuit board, PCB, the first THz emitter configured to emit a first THz beam into an environment;
a second THz emitter attached to a second, opposite side of the PCB, the second THz emitter configured to emit a second THz beam in a second, opposite direction into the environment;
a first THz receiver attached to the first side of PCB, the first THz receiver configured to receive a first reflection of the first THz beam from a first reflective object in the environment; and
a second THz receiver attached to the second side of the PCB, the second THz receiver configured to receive a second reflection of the second THz beam from a second reflective object in the environment,
wherein at least one micromirror of the THz sensor module has a tilt angle i so that the THz beam is reflected off the micromirror of the THz sensor module and into an environment along a transmission plane determined at least in part by the tilt angle,
the THz sensor module is configured to determine whether a tilt angle of the at least one micromirrors of the THz sensor module is less than or equal to a maximum tilt angle for the micromirror; in accordance with the tilt angle being less than or equal to the maximum tilt angle: detecting a target and a reference gas/chemical concentration in the transmission plane; storing the tilt angle and target and reference gas/chemical concentrations in memory; incrementing the tilt angle by a step angle x; and returning to the determining step;
in accordance with the tilt angle being greater than the maximum tilt angle:
comparing the target and reference gas/chemical concentration at each stored tilt angle;
compensating the target gas/chemical concentration based on results of the comparing; and
reporting the target gas/chemical concentration.
